# EUROPEAN PATENT APPLICATION

(11) **EP 2 958 312 A2**
(43) Date of publication of application: **23.12.2015**
(21) Application number: 15172039.8
(22) Date of filing: 15.06.2015
(51) Int. Cl.: H04N 1/00

(54) **INFORMATION DISPLAY UNIT AND METHOD OF MULTI-LEVEL TYPE, ORDERING APPARATUS AND COMPUTER-EXECUTABLE PROGRAM**

(30) Priority: 16.06.2014 JP 2014123855
(71) Applicant: Fujifilm Corporation, Minato-ku Tokyo 106-8620 (JP)
(72) Inventor: KATSUMATA, Yukinori, Tokyo (JP)
(74) Representative: Klunker . Schmitt-Nilson . Hirsch

(57) **Abstract**

An information display unit includes a first display control device (31) for displaying a plurality of first button portions (A1-A6) of higher level items of a first menu level (A) in a button display area (R3) . A selective detector (33) detects a selected first button portion (A1, A2) selected among the plural first button portions. A second display control device (32) displays a plurality of second button portions (B1a-B2e) within the selected first button portion in relation to lower level items of a second menu level (B) associated with a higher level item of the selected first button portion. Preferably, the first display control device causes the first button portions to display the higher level items, and the second display control device causes the second button portions to display the lower level items. Also, the second display control device aligns the second button portions within the first button portions.

## Description

### BACKGROUND OF THE INVENTION

### 1. Field of the Invention

The present invention relates to an information display unit and method of a multi-level type, ordering apparatus and computer-executable program. More particularly, the present invention relates to an information display unit and method of a multi-level type in which lower level items of a multi-level menu structure can be reliably displayed with an economized space, and ordering apparatus and computer-executable program.

### 2. Description Related to the Prior Art

A user interface for inputting and outputting information to a relevant electronic apparatus is known, and displays information in a screen view according to the GUI (graphical user interface). A multi-level menu structure is widely used for a user to input information. In the multi-level menu structure, higher level items (first level items) of a first menu level are displayed in the screen view. In case the user selects one of the higher level items, lower level items (second level items) of a second menu level become displayed. The lower level items are related to the second menu level as a lower level under the selected one of the higher level items.

A method of displaying the multi-level menu structure is disclosed in JP-A 2001-265477. In case one of the higher level items is selected, the lower level items are developed and displayed on a side adjacent to the first menu level without an overlapped manner. Also, JP-A 9-214905 discloses a display method in which first and second display areas are preset. The first display area displays a plurality of the higher level items in a developed manner. The second display area displays a plurality of the lower level items in a developed manner as a lower level associated with one of the higher level items. In JP-A 9-214905, the lower level items are always displayed in the second display area as a level under one of the higher level items. Assuming that a selection of the higher level items is changed over, the lower level items in the second display area are also changed.

JP-A 2007-060562 discloses an ordering apparatus for placement of an order of printing images. For ordering, the images are read from a storage medium, such as a memory card, displayed on a list display area of the GUI, and designated manually by a user for inputs of the order.

To display plural items of the second menu level in the multi-level menu structure, it is necessary as disclosed in JP-A 2001-265477 and JP-A 9-214905 to form a display area for the lower level items, or to predetermine the display area to be formed for the purpose of displaying the lower level items of the second level in a developed manner. There arises a problem in that remaining display images may be hidden with the display area, or that a space for displaying the remaining display images must be reduced or narrowed.

### SUMMARY OF THE INVENTION

In view of the foregoing problems, an object of the present invention is to provide an information display unit and method of a multi-level type in which lower level items of a multi-level menu structure can be reliably displayed with an economized space, and ordering apparatus and computer-executable program.

In order to achieve the above and other objects and advantages of this invention, an information display unit of a multi-level type includes a first display control device for displaying plural first button portions of higher level items of a first menu level in a button display area. A selective detector detects a selected first button portion selected among the plural first button portions. A second display control device displays a plurality of second button portions within the selected first button portion in relation to lower level items of a second menu level associated with a higher level item of the selected first button portion.

Preferably, the first display control device displays the higher level items in the first button portions, and the second display control device displays the lower level items in the second button portions.

Preferably, the second display control device aligns the second button portions within the selected first button portion.

Preferably, the second display control device displays and aligns the higher level item and the second button portions within the selected first button portion.

Preferably, the first button portions have a predetermined display size irrespective of presence or absence of the second button portions, and the second display control device displays the second button portions at a smaller display size than the display size of the first button portions.

In a preferred embodiment, while the plural first button portions are aligned in the button display area and while the second button portions are displayed within the selected first button portion, the first display control device enlarges the selected first button portion in an arrangement direction of the first button portions. The second display control device arranges the second button portions in the arrangement direction of the first button portions.

Preferably, while the plural second button portions are arranged and displayed, the first display control device scrolls remainder of the first button portions arranged in the arrangement direction of the first button portions in the button display area.

Preferably, furthermore, a touchscreen display device having a display panel for displaying the button display area, and a touch sensor incorporated in the display panel for constituting the selective detector.

Also, an ordering apparatus is provided, and includes the information display unit as defined above. A display device displays the button display area, a list display area and a specific display area, the list display area displaying plural input images, the specific display area displaying plural selected images selected among the input images in the list display area. An ordering device places an order of printing one of the selected images in the specific display area.

Preferably, the plural first button portions include a date button portion for inputting command information for adding a calendar date text to the selected image to be printed, and a margin button portion for inputting command information for adding a margin portion to the selected image to be printed.

Also, an information display method of a multi-level type includes a step of displaying a plurality of first button portions of higher level items of a first menu level in a button display area. A first button portion is selected among the plural first button portions. A plurality of second button portions are displayed within the selected first button portion in relation to lower level items of a second menu level associated with a higher level item of the selected first button portion.

Preferably, the first button portions have a predetermined display size irrespective of presence or absence of the second button portions, and the second button portions are displayed at a smaller display size than the display size of the first button portions.

Preferably, while the plural first button portions are aligned in the button display area and while the second button portions are displayed within the first button portions, the selected first button portion is enlarged in an arrangement direction of the first button portions. The second button portions are aligned in the arrangement direction of the first button portions.

Also, a computer-executable program for information display of a multi-level type includes a first display control program code for displaying a plurality of first button portions of higher level items of a first menu level in a button display area. A detection program code is for detecting a selected first button portion selected among the plural first button portions. A second display control program code is for displaying a plurality of second button portions within the selected first button portion in relation to lower level items of a second menu level associated with a higher level item of the selected first button portion.

Consequently, lower level items of a multi-level menu structure can be reliably displayed with an economized space, because second button portions are displayable in a selected one of first button portions.

### BRIEF DESCRIPTION OF THE DRAWINGS

The above objects and advantages of the present invention will become more apparent from the following detailed description when read in connection with the accompanying drawings, in which:
Fig. 1 is an explanatory view illustrating a printing system;
Fig. 2 is a block diagram schematically illustrating an ordering apparatus;
Fig. 3 is a block diagram schematically illustrating an information display unit;
Fig. 4 is a plan illustrating a user screen view;
Fig. 5A is a plan illustrating plural first button portions;
Fig. 5B is a plan illustrating the first button portions and second button portions displayed in one of the first button portions;
Fig. 6A is a plan illustrating the same as Fig. 5A;
Fig. 6B is a plan illustrating the first button portions and the second button portions in a scrollable structure of the first button portions.

### DETAILED DESCRIPTION OF THE PREFERRED EMBODIMENT(S) OF THE PRESENT INVENTION

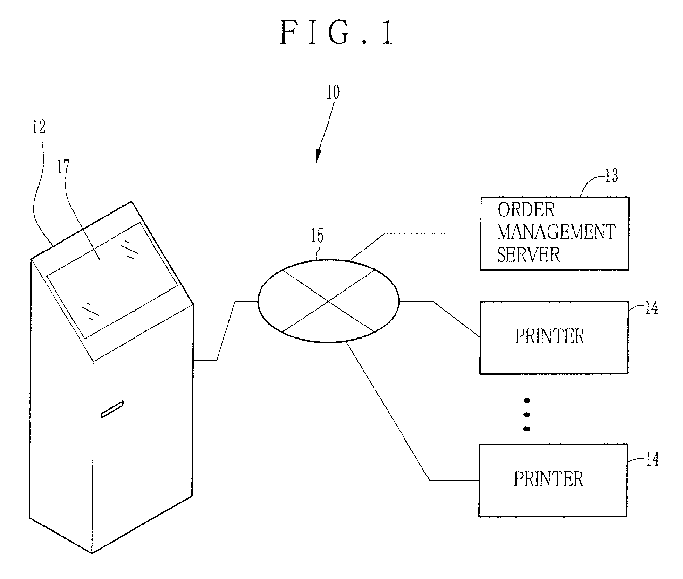

In Fig. 1, a remote printing system 10 (print order processing system) or online ordering system includes an ordering apparatus 12 with an information display unit (user interface), an order management server 13 and a printer 14 , which are connected with one another by a communication network 15. The ordering apparatus 12 is located in a store of a photo finisher or the like, and receives image data and order information, such as the number of prints, size of prints, method of supply, place of supply and the like. The ordering apparatus 12 sends the image data and the order information to the order management server 13. In Fig. 1, a single ordering apparatus 12 is illustrated. However, two or more of the ordering apparatuses 12 can be installed in one place.

A touchscreen display device 17 is incorporated in the ordering apparatus 12. A graphical user interface (GUI) is used in the touchscreen display device 17 as a user interface for placing an order, so that a user can operate the touchscreen display device 17 by viewing a screen view of the GUI.

The order management server 13 manages image data and order information for printing after reception in the ordering apparatus 12. The order management server 13 transmits the image data to the printer 14 according to the order information, to produce prints. The printer 14 is disposed together with the ordering apparatus 12 in the store or disposed remotely. Also, a plurality of the printers 14 can be disposed for use. The order management server 13 selects one of the printers 14 of an optimum condition for the place and method of supply. Prints are produced by the selected printer 14. The prints are supplied to a customer or user in the store, or are delivered to the user by shipment.

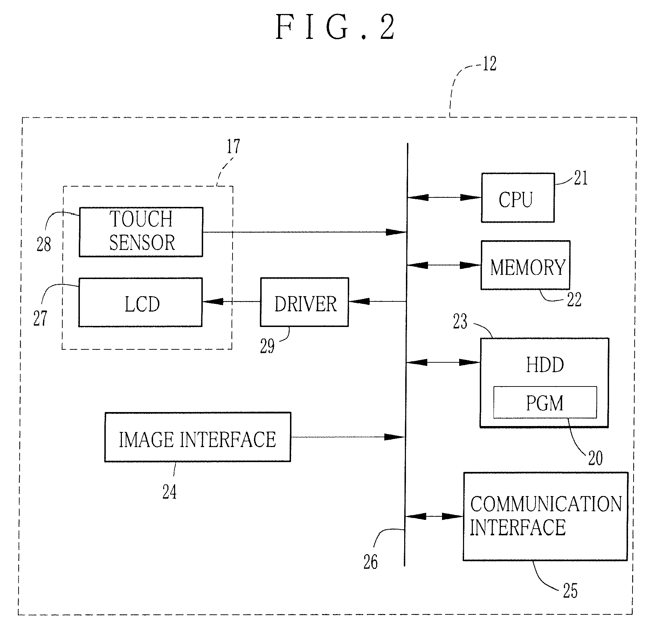

In Fig. 2, the ordering apparatus 12 is constituted by a widely used personal computer as a basis. Various computer-executable programs 20 are installed in the personal computer for functioning the ordering apparatus 12. The computer-executable programs 20 include an Operating System (OS) as a control program, order processing program such as a display processing program for directory information.

The ordering apparatus 12 includes a CPU 21 (central processing unit), a memory 22, a hard disk drive 23, an image interface 24, a communication interface 25 and the touchscreen display device 17. A data bus 26 interconnects those circuit devices of the ordering apparatus 12.

The CPU 21 performs a task of processing the order in the operation of the Operating System, and controls various circuit devices. The memory 22 includes a storage area for loading the computer-executable programs 20 (control program, order processing program and the like), and a working memory area for running the programs. The hard disk drive 23 stores the computer-executable programs 20, with which the memory 22 is loaded. Also, the hard disk drive 23 has an area for temporarily storing image data uploaded by a user upon receiving the order.

The image interface 24 is used to input images to the ordering apparatus 12, and reads out image data from a digital camera, storage medium and the like. For example, the image interface 24 includes a memory card reader for a memory card of any one of various formats, and a communication interface for communication with the digital camera or smart phone (multi-function mobile telephone) by use of a wireless LAN or short range wireless communication. Thus, image data can be input by various methods. The communication interface 25 performs communication with the order management server 13 by use of the communication network 15.

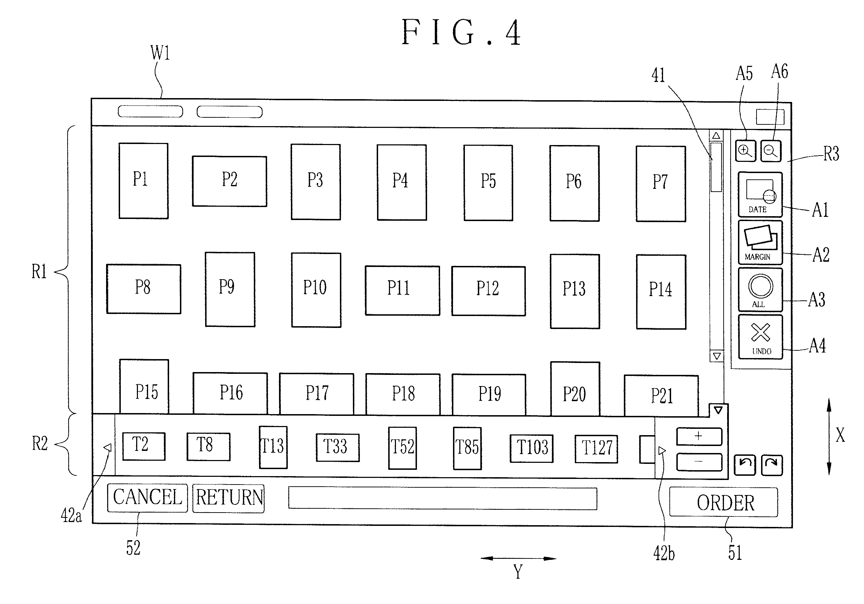

The touchscreen panel 17 includes an LCD panel 27 (liquid crystal display panel) and a touch sensor 28. A driver 29 drives the LCD panel 27 to display a screen view of various types for receiving an order, such as a user screen view W1 of Fig. 4. An example of the display panel can be an organic EL display device. The touch sensor 28 is disposed on a display surface of the LCD panel 27, and outputs a detection signal according to a touch position. The touch sensor 28 is a pointing device for designating an input position in a screen view in the LCD panel 27. The touch position is the input position.

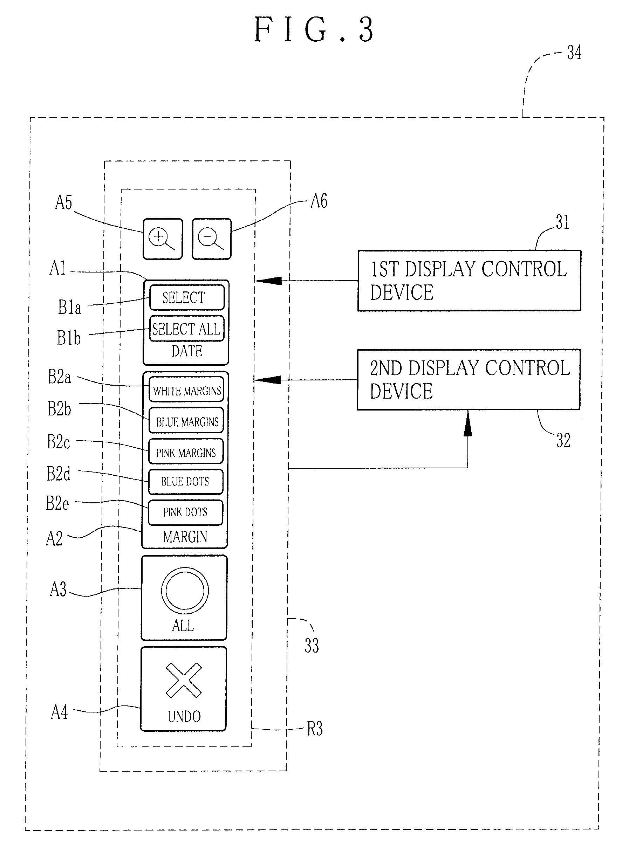

The order processing program in the ordering apparatus 12 is run, so that circuit devices with functions are ready to operate in the ordering apparatus 12, inclusive of a first display control device 31, a second display control device 32 and a selective detector 33 or button selector. An information display unit 34 or user interface or display processor has the display control devices 31 and 32 and the selective detector 33. The second button portions B1a, B1b and B2a-B2e are depicted in the first button portions A1 and A2 for clarifying the structure in Fig. 3. Note that the second button portions B1a and B1b (B1) do not appear at the same time as the second button portions B2a-B2e (B2) in actual operation.

The selective detector 33 is constituted by the touch sensor 28 and the CPU 21, and operates for selecting first button portions A (A1-A6) or screen icons displayed in a button display area R3. The selective detector 33 receives information of a touch position of tapping the touch sensor 28 and position information of a position of one of the first button portions A from the first display control device 31, and specifies the selected first button portion A. For second button portions B (screen icons), a selected one of the second button portions B is specified according to a touch position and position information of the second button portion B from the second display control device 32. Note that various examples of input devices can be used in the selective detector 33 besides the touch sensor 28 (the touchscreen display device 17), such as a mouse for pointing a desired input position in a display surface with a pointer indicia (cursor), and other pointing devices.

The first display control device 31 displays the first button portions A of a higher level item (first level item) of the first menu level in the button display area R3. Among those, first button portions A1 and A2 are associated with a tree structure of the menu levels inclusive of a lower menu level. The higher level items of the first button portions A1 and A2 are associated with plural lower level items (second level items) of a second menu level. The second display control device 32 performs display control of displaying second button portions B of the lower level items corresponding to the higher level item in a selected one of the first button portions A1 and A2 according to selection with the selective detector 33.

Note that an ordering device is constituted by the CPU 21, the communication interface 25 and other circuit devices for placing an order of printing selected images by use of a specific display area, which will be described later. Also, the LCD panel 27 is the display device for displaying the button display area, a list display area and the specific display area.

The operation of the ordering apparatus 12 is described now. To place an order for printing, a user or customer manually operates the touchscreen display device 17 of the ordering apparatus 12, and selects a format of a memory card for storing image data, or interface standards for a digital camera or smart phone (portable communication equipment). Then he or she inserts the memory card in a memory card reader of the ordering apparatus 12. Otherwise, he or she sets the digital camera or smart phone in connection with the ordering apparatus 12 by use of a radio communication or the like.

Image data are read out in the ordering apparatus 12 from the memory card, digital camera, smart phone or the like. The image data are stored in the hard disk drive 23 as input images.

In case all of the image data become stored, the touchscreen display device 17 displays the user screen view W1 of Fig. 4. The user screen view W1 is used mainly for selecting desired input images for printing and displayed by use of the GUI of the touchscreen display device 17.

The user screen view W1 includes a list display area R1, a specific display area R2, the button display area R3 and the like. Plural thumbnail images P (P1, P2, ...) are displayed in the list display area R1 according to input images in a form of M arrays and N columns, where M and N are natural numbers. In case it is impossible to display all the thumbnail images P in the list display area R1 simultaneously, a vertical scroll bar 41 is displayed in the list display area R1. The thumbnail images P in the user screen view W1 is scrolled in the vertical direction X by touching the vertical scroll bar 41, or by flicking or dragging action in the list display area R1, to display the thumbnail images P which have been in the non-displayed state.

Tapping is a brief touch of a finger on the touchscreen display device 17. Dragging is action of touching the touchscreen display device 17 with the finger and shifting a touch position of the touch of the finger. Flicking is a shift of a touch position in a manner similar to the dragging action, but different from the dragging action in that the finger is quickly shifted while the touch is maintained. Those steps are similar to such used in an apparatus having a touchscreen panel.

To select an input image to be printed, one of the thumbnail images P corresponding to the input image is tapped in the list display area R1. Thus, the corresponding input image is selected as a selected image for printing. Also, the tapping sets the thumbnail image P editable for inputting the number of prints and other conditions. Assuming that another thumbnail image P is tapped, the editable state is changed over from the initial thumbnail image P to the newly tapped thumbnail image P.

Selected thumbnail images T (T2, T8 and the like) are created from selected images, and displayed in the specific display area R2. The specific display area R2 is in a horizontally long shape, and disposed under the list display area R1. In compliance with a plurality of selected thumbnail images T, the specific display area R2 displays an array of the plural selected thumbnail images T in the horizontal direction Y of the arrow in the user screen view W1. The user screen view W1 is scrollable to view more numerous selected thumbnail images T than those displayed within the active area of the display. Assuming that selection of a selected thumbnail image T is undone in relation to printing an input image, the selected thumbnail image T is deleted from the specific display area R2. For undoing the selection, the thumbnail image P in an editable state is tapped.

Input images desired for printing are selected by use of the thumbnail images P one after another, in the manner described above. The selected thumbnail images T of the selected images are added into the specific display area R2 at each time of selecting the input images. The user can recognize the selected images by viewing the selected thumbnail images T in the specific display area R2.

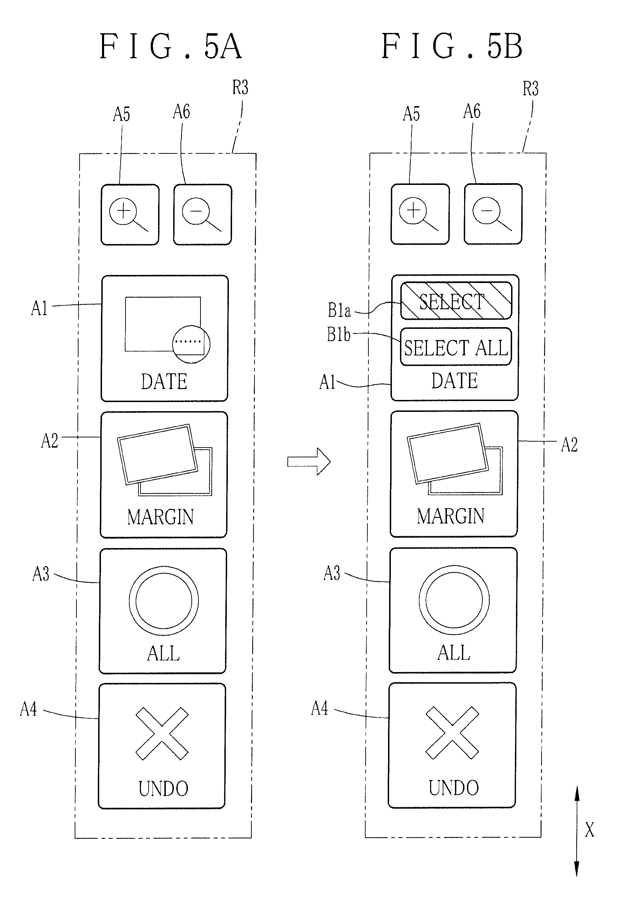

The button display area R3 is disposed beside the list display area R1. In Fig. 5A, a plurality of first button portions A1-A6 are displayed in the button display area R3. The first button portions A1-A6 are arranged linearly in the vertical direction of the user screen view W1.

The first button portion A1 is a date button portion for adding a calendar date text into an image to be printed. The first button portion A2 is a margin button portion for producing a print with blank margin portions. The first button portion A3 is a select-all button portion for selecting all input images to be printed. The first button portion A4 is an undo button portion for undoing selection of selected images. The first button portions A5 and A6 are for enlarging and reducing a size of each of the thumbnail images P in the list display area R1. Various symbols or letters are displayed additionally with the first button portions A1-A6, the letters expressing information of the higher level items (first level items) of "DATE", "MARGIN", "ALL" and "UNDO" , the symbols expressing information of the higher level items.

As described above, a plurality of the lower level items (second level items) are determined at a lower menu level than the higher level items of the first button portions A1 and A2. Tapping either one of the first button portions A1 and A2 displays the second button portions B of the lower level items.

The higher level item of "DATE" of the first button portion A1 is associated with lower level items "SELECT" and "SELECT ALL" of a lower menu level. In case the first button portion A1 is pressed for printing with a calendar date, then second button portions B1a and B1b with letters of "SELECT" and "SELECT ALL" as lower level items are displayed within the first button portion A1 as illustrated in Fig. 5B. In short, the lower level items become displayed visibly within the first button portion A1.

In the first button portion A1, second button portions B1a and B1b and the higher level item of "DATE" are arranged and displayed in alignment. The second button portions B1a and B1b have a smaller size than the first button portion A1 having a constant size. An arrangement direction of arranging the second button portions B1a and B1b is equal to that of the first button portions A1-A6.

Thus, it is unnecessary to hide the thumbnail image P or selected thumbnail image T because the first button portion A1 does not change in its size but displays the lower level items. Also, it is unnecessary to reduce sizes of the list display area R1 and the specific display area R2 for the purpose of displaying the lower level items.

In the structure where the size of the first button portion A1 is unchanged while the second button portions B are displayed, a direction of arranging the second button portions B within one of the first button portions A may be different from the arrangement direction of the first button portions A. Furthermore, it is possible to arrange the plural second button portions B in a matrix form within the first button portion A.

Tapping one of the second button portions B1a and B1b selects a corresponding lower level item. In the display, an inner space of the selected second button portion B is displayed with an inverted color as depicted by a hatched portion in Fig. 5B, to notify a user of the selected state. In the present embodiment, the second button portion B1a in an initial state is in the selected state (turn-on state). Furthermore, it is possible to keep the second button portions B1a and B1b in a non-selected state (turn-off state) until a user selects either one of the second button portions B1a and B1b.

To produce a print with a calendar date text, at first the second button portion B1a is operated selectively. Then one of the thumbnail images P corresponding to the input image of interest is selected by tapping in the list display area R1. Data of a new input image is produced, as a combination of the selected input image and the calendar date. The new input image is stored in the hard disk drive 23 together with other input images. Also, a thumbnail image P of the new input image is created and displayed in the list display area R1. In case the thumbnail image P is selected, a selected thumbnail image T of the new input image is displayed in the specific display area R2. Information of the calendar date is automatically retrieved from auxiliary information stored with the image data.

The second button portion B1b functions to control for adding calendar dates to all of input images to be printed. Tapping the second button portion B1b selects all of the input images for addition of the calendar dates. After selecting the second button portion B1b, new input images with the calendar dates are created, and its thumbnail image P and selected thumbnail image T are displayed. After this, the second button portion B1a is in the selected state (turn-on state). Tapping the selected second button portion B1a or the remaining first button portions A undoes the selection of the first button portion A1 (in a turn-off state). The second button portions B1a and B1b become hidden in the non-displayed state. In Fig. 5A, the first button portion A1 becomes displayed again.

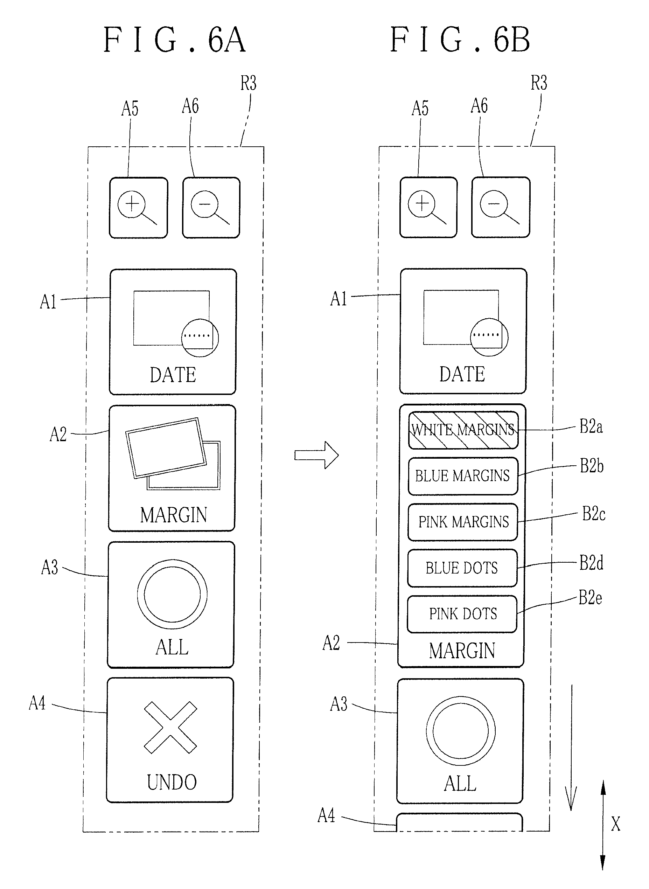

One of the higher level items "WITH MARGINS" of the first button portion A2 is associated with lower level items at a lower menu level for various types of margin portions. Examples of the lower level items include "WHITE MARGINS", "BLUE MARGINS", "PINK MARGINS", "BLUE DOTTED MARGINS" and "PINK DOTTED MARGINS". In case the first button portion A2 is selected by tapping in the state of Fig. 6A, then the second button portions B2a-B2e are indicated within the first button portion A2 with information of the lower level items as illustrated in Fig. 6B, for example, words of "WHITE MARGINS", "BLUE MARGINS", "PINK MARGINS", "BLUE DOTS" and "PINK DOTS".

In the first button portion A2, the number of the second button portions B to be displayed is so high that the second button portions B cannot be displayed in a size suitable for easy use of users. Thus, the first button portion A2 is enlarged and displayed in the button display area R3 in the arrangement direction of the first button portions A1-A6. The second button portions B2a-B2e and the letters "MARGIN" for the higher level item of the first button portion A2 are displayed within the first button portion A2 in an aligned manner in an arrangement direction of the first button portions A.

To enlarge (elongate) the first button portion A2 in the display, the first button portions A3 and A4 are scrolled in the button display area R3 as remaining first button portions disposed in the arrangement direction. Thus, a display area of the first button portion A2 is ensured at a sufficient size. It is unnecessary to hide the thumbnail image P or selected thumbnail image T or reduce the size of the list display area R1 and the specific display area R2 even for the purpose of displaying the lower level items.

Even assuming that the first button portions A3 and A4 are unusable after scroll in the button display area R3, no problem occurs, because the first button portion A2 is being selected. Also, it is possible to display an enlarged part of the first button portion A2 in an overlapped manner on the first button portions A3 and A4 instead of scrolling the first button portions A3 and A4.

To display the second button portions B2a-B2e by enlarging (elongating) the first button portion A2, it is preferable to display a transition image (animation image) for processes of changing a button size of the first button portion A2, changing the second button portions B2a-B2e from the non-displayed state to the visible state, and scrolling the first button portions A3 and A4. Thus, a user or viewer can view the displayed information in a smooth manner without strange impression.

To produce a print with a margin, one of the second button portions B2a-B2e is selected by tapping within the first button portion A2 as described above. Also, one of the thumbnail images P corresponding to an input image of which the user desires margins is tapped and selected in the list display area R1. In a manner similar to the second button portion B1a, a new input image is created by adding a margin to the selected input image in a mode of preference according to one of the second button portions B2a-B2e. Also, the new thumbnail image P and selected thumbnail image T are displayed.

The selection of the first button portion A2 is undone by tapping the selected one of the second button portions B2a-B2e or tapping the remainder of the first button portions A. Thus, the second button portions B2a-B2e are hidden in the non-displayed state. In Fig. 6A, the size of the first button portion A2 becomes as small as its initial size.

Note that a position of displaying the button display area R3 is not limited to the embodiment. For example, the button display area R3 can be disposed higher than the list display area R1 to extend horizontally. A plurality of first button portions A can be arranged horizontally in alignment in the user screen view W1. In compliance with this, the first button portion A2 can be enlarged in the horizontal direction of the user screen view W1.

After completing selection of prints, an order button 51 is tapped. Image data of selected images corresponding to selected thumbnail images T designated in the user screen view W1 and displayed in the specific display area R2 are uploaded to the order management server 13 together with the order information. Note that various buttons are displayed for use in the specific display area R2, such as a left side scroll button 42a, a right side scroll button 42b, and a cancel button 52.

The above-described button portions are used for inputting auxiliary information for online ordering of prints of images, in relation to addition of a calendar date, forming of margins, and selection of images. However, auxiliary information to be input by use of button portions of the invention can be other information, for example, a method of payment, optional packaging for gift, and the like.

In the above embodiment, the button portions are shaped similarly to mechanical pushbuttons. However, the button portions are not limited to the embodiment. Examples of the button portions of the invention can be an icon, tab, window, box, field, a series of letters, a pattern of one or more lines, and other graphical representations.

The button display area R3 described above extends from the upper right corner of the display surface in the downward direction. Scroll of the first button portions A1-A6 is performed in the downward direction. However, scroll of the first button portions A1-A6 can be performed in an upward direction. The button display area R3 can be disposed to extend along a left side line of the display surface. Furthermore, it is possible in the invention to utilize well-known techniques of the button bar, navigation bar and the like.

In the above embodiment, the higher level items of the first button portions and the lower level items of the second button portions are only examples. The invention is not limited to the examples. In the above embodiment, the information display unit is associated with the ordering apparatus. However, an information display unit of the invention can be used for the purpose of displaying a menu level of a hierarchical tree with button portions, in the field of the information display unit (user interface) and data uploading. Furthermore, a computer-executable program for the information display unit (user interface) according to the invention can be installed in a computer of an individual user for home use.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. An information display unit of a multi-level type comprising:
a first display control device (31) for displaying plural first button portions (A1-A6) of higher level items of a first menu level (A) in a button display area (R3);
a selective detector (33) for detecting a selected first button portion (A1, A2) selected among said plural first button portions; and
a second display control device (32) for displaying a plurality of second button portions (B1a-B2e) within said selected first button portion in relation to lower level items of a second menu level (B) associated with a higher level item of said selected first button portion.

2. An information display unit as defined in claim 1, wherein said first display control device displays said higher level items in said first button portions, and said second display control device displays said lower level items in said second button portions.

3. An information display unit as defined in claim 1, wherein said second display control device aligns said second button portions within said selected first button portion.

4. An information display unit as defined in claim 1, wherein said second display control device displays and aligns said higher level item and said second button portions within said selected first button portion.

5. An information display unit as defined in claim 1, wherein said first button portions have a predetermined display size irrespective of presence or absence of said second button portions, and said second display control device displays said second button portions at a smaller display size than said display size of said first button portions.

6. An information display unit as defined in claim 1, wherein while said plural first button portions are aligned in said button display area and while said second button portions are displayed within said selected first button portion, said first display control device enlarges said selected first button portion in an arrangement direction of said first button portions;
said second display control device arranges said second button portions in said arrangement direction of said first button portions.

7. An information display unit as defined in claim 6, wherein while said plural second button portions are arranged and displayed, said first display control device scrolls remainder of said first button portions arranged in said arrangement direction of said first button portions in said button display area.

8. An information display unit as defined in claim 1, further comprising a touchscreen display device having a display panel for displaying said button display area, and a touch sensor incorporated in said display panel for constituting said selective detector.

9. An ordering apparatus comprising:
the information display unit as defined in claim 1;
a display device for displaying said button display area, a list display area and a specific display area, said list display area displaying plural input images, said specific display area displaying plural selected images selected among said input images in said list display area; and
an ordering device for placing an order of printing one of said selected images in said specific display area.

10. An ordering apparatus as defined in claim 9, wherein said plural first button portions include:
a date button portion for inputting command information for adding a calendar date text to said selected image to be printed; and
a margin button portion for inputting command information for adding a margin portion to said selected image to be printed.

11. An information display method of a multi-level type comprising steps of:
displaying a plurality of first button portions (A1-A6) of higher level items of a first menu level (A) in a button display area (R3);
selecting a first button portion (A1, A2) among said plural first button portions; and
displaying a plurality of second button portions (B1a-B2e) within said selected first button portion in relation to lower level items of a second menu level (B) associated with a higher level item of said selected first button portion.

12. An information display method as defined in claim 11, wherein said first button portions have a predetermined display size irrespective of presence or absence of said second button portions, and said second button portions are displayed at a smaller display size than said display size of said first button portions.

13. An information display method as defined in claim 11, wherein while said plural first button portions are aligned in said button display area and while said second button portions are displayed within said first button portions, said selected first button portion is enlarged in an arrangement direction of said first button portions;
said second button portions are aligned in said arrangement direction of said first button portions.

14. A computer-executable program for information display of a multi-level type, comprising:
a first display control program code for displaying a plurality of first button portions (A1-A6) of higher level items of a first menu level (A) in a button display area (R3);
a detection program code for detecting a selected first button portion (A1, A2) selected among said plural first button portions; and
a second display control program code for displaying a plurality of second button portions (B1a-B2e) within said selected first button portion in relation to lower level items of a second menu level (B) associated with a higher level item of said selected first button portion.
